# EUROPÄISCHE PATENTANMELDUNG

(11) **EP 1 191 311 A2**
(43) Veröffentlichungstag der Anmeldung: **27.03.2002**
(21) Anmeldenummer: 01121220.6
(22) Anmeldetag: 05.09.2001
(51) Int. Cl.: G01F 1/40, G01F 1/44

(54) **Massendurchflussmesser mit austauschbarer Venturidüse**

(30) Priorität: 20.09.2000 DE 10046618
(71) Anmelder: HeaTec Thermotechnik GmbH, 73066 Uhingen (DE)
(72) Erfinder: Schwarz, Hans-Jochen, Dr., 70190 Stuttgart (DE); Stengel, Peter, 73235 Weilheim (DE)
(74) Vertreter: Patentanwälte Rüger, Barthelt & Abel

(57) **Zusammenfassung**

Ein vielseitig einsetzbarer und leicht an unterschiedliche Anwendungsfälle anpassbarer Strömungswächter (1) weist einen Durchgang (6) auf, in dem verschiedene, für den jeweiligen Einsatzfall vorgesehene oder individualisierte Einsätze (14) einsteckbar sind. Die Einsätze sind vorzugsweise lediglich reibschlüssig gehalten, um eine leichte Auswechselbarkeit zu ermöglichen. Außerdem ermöglicht der Sitz und die Lagerung durch Reibschluss, bspw. in Form von O-Ringen einen sehr guten Toleranzausgleich, so dass Fertigungstoleranzen durch Spritzgusstechnik, Materialschrumpfungen oder Verwendung unterschiedlicher Materialien ausgeglichen werden. Damit ergibt sich ein besonders fertigungssicherer Strömungswächter (1).

## Beschreibung

Die Erfindung betrifft eine Einrichtung zur Erfassung von Fluidströmen, insbesondere von flüssigen Medien.

In der Haustechnik, in der Heizungsinstallation, bei der Warmwasserbereitung und ähnlich gelagerten Anwendungsfällen stellt sich häufig die Aufgabe, zu erfassen, ob eine Flüssigkeitsströmung, zum Beispiel eine Wasserströmung, vorliegt oder nicht. Dabei ist letztendlich zu erfassen, ob ein gegebener Minimalgrenzwert für die Strömung überschritten ist oder nicht. Gelegentlich gilt es auch, zu erfassen, wie groß der erfasste Fluidstrom ist. Dazu dienende Erfassungseinrichtungen sollen hierbei mehreren Anforderungen gleichzeitig genügen. Die entsprechenden Einrichtungen sollen selbstverständlich einfach und kostengünstig zu fertigen sein. Dabei muss allerdings sichergestellt sein, dass in der Fertigung keine zu großen Streuungen auftreten. Der Aufbau der Einrichtung muss deshalb so beschaffen sein, dass diese gut reproduzierbare und in der Fertigung konstante Werte liefert. Dabei soll auf aufwendige Abgleichmaßnahmen möglichst zu verzichten sein, um den Produktionsprozess einfach und sicher zu gestalten.

Häufig stellt sich das Erfordernis, ein Schaltsignal sicher schon bei äußerst geringen Durchströmungen auszulösen, andererseits aber nur einen sehr geringen Druckverlust zu erzeugen.

Erfassungseinrichtungen der genannten Art, die häufig auch als Strömungswächter bezeichnet werden, werden in der Praxis für unterschiedliche Einsatzfälle benötigt. Herstellerseitig kommt es dabei darauf an, diesen unterschiedlichen Einsatzfällen Rechnung zu tragen, d.h. entsprechend unterschiedliche Strömungswächter bereitzustellen.

Hier setzt die Erfindung an, die sich zur Aufgabe gemacht hat, eine Einrichtung zur Erfassung einer Fluidströmung zu schaffen, die sich auf einfache Weise an unterschiedliche Einsatzfälle anpassen lässt.

Diese Aufgabe wird mit einer Erfassungseinrichtung gelöst, die die Merkmale des Patentanspruchs 1 aufweist.

Die erfindungsgemäße Erfassungseinrichtung basiert auf der Erfassung eines Drucks, der von der Strömung des strömenden Mediums hervorgerufen ist. Dazu ist die Erfassungseinrichtung mit einem Mittel zur Umsetzung der Strömung des fluiden Mediums in einen Druck und mit einer Druckerfassungseinrichtung versehen. Die Umsetzung der Strömung in einen Druck erfolgt vorzugsweise nach dem Bernoulli-Prinzip. Jedoch können auch andere strömungsinduzierte Drücke, wie bspw. Staudruck, genutzt werden. Zur Umsetzung der Strömungsgeschwindigkeit des strömenden Mediums in einen Druck dient bei der erfindungsgemäßen Einrichtung ein Einsatz, der in einen Durchgang des Gehäuses der Einrichtung eingesetzt ist. Dieser Einsatz legt fest, auf welche Weise und in welchem Maße eine Strömung in einen Druck umgesetzt wird. Durch Wechseln des Einsatzes ist die Einrichtung (der Strömungswächter) somit an unterschiedliche Anwendungsfälle anpassbar.

Dadurch kann die Fertigung vereinfacht werden. Es sind für unterschiedliche Anwendungsfälle lediglich einheitliche Gehäuse bereitzustellen, in die dann für den jeweiligen Anwendungsfall individuelle Einsätze einzusetzen sind. Das Standardgehäuse kann dann auch mit mehreren Einsätzen als Satz (Kit) ausgeliefert werden, wobei der Kunde dann den für ihn passenden Einsatz wählt und in das Gehäuse einsetzt.

Der Einsatz weist eine Engstelle auf, die eine Erhöhung der Strömungsgeschwindigkeit des durchströmenden Mediums an dieser Stelle gegenüber dem sonstigen Fluidkanal erzwingt. Von dem Einsatz zweigt ein Kanal ab, der vorzugsweise an einer Stelle in der Nähe oder an der Engstelle mündet, an der bei strömendem Medium ein verminderter Druck auftritt. Der Kanal dient dann als Saugkanal. Mit zunehmender Strömungsgeschwindigkeit des fluiden Mediums nimmt der zu der Erfassungseinrichtung gelieferte Druck somit ab.

Der Einsatz kann somit als Venturidüse ausgebildet sein. Diese gestattet eine hohe Signalausbeute, d.h. es werden schon bei niedrigen Strömungsgeschwindigkeiten relativ große Unterdrücke erzeugt, wodurch die Erfassungseinrichtung die Strömung eindeutig erfassen kann. Andererseits treten bei hohen Strömungsgeschwindigkeiten nur geringe Druckverluste auf. Hiermit wird ein in der Praxis sehr häufig auftretendes Erfordernis erfüllt.

Der Einsatz ist in dem Durchgang vorzugsweise lediglich reibschlüssig gehalten, d.h. er ist in zumindest einer Richtung aus dem Gehäuse herausdrückbar. In der anderen Richtung kann er mittels einer Anlagefläche axial positioniert sein. Dabei ist die Ausrichtung vorzugsweise so getroffen, dass das durch den Einsatz fließende Medium den Einsatz gegen seine Anlagefläche drückt. Weitere Sicherungsmittel können häufig entfallen. Der reibschlüssige Sitz ist einfach herzustellen, indem der Einsatz in das Gehäuse eingesteckt wird und der Einsatz ist bedarfsweise auf besonders einfache Weise wieder auswechselbar. Bedarfsweise können allerdings auch zusätzliche Lagesicherungselemente vorgesehen werden.

Der Einsatz ist vorzugsweise koaxial, wenigstens zu der Eingangsöffnung des Gehäuses ausgerichtet, um bedarfsweise durch diese hindurch einfach in das Gehäuse eingesteckt werden zu können oder aus diesem herausgenommen werden zu können. Dazu weist der Einsatz vorzugsweise einen Außendurchmesser auf, der geringer ist, als der Innendurchmesser der Einlassöffnung.

Der reibschlüssige Sitz des Einsatzes in dem Durchgang des Gehäuses kann bspw. durch O-Ringe oder anderweitige ähnliche Dichtungselemente bewirkt werden, die in einer Ringnut des Einsatzes sitzen. Sie finden ihre Gegenanlage vorzugsweise an zylindrischen Innenwandungsabschnitten des Durchgangs und haben somit Doppelfunktion. Zum einen dienen sie als Halteelement für den Einsatz, zum anderen als Dichtungselement. Hiermit wird eine besonders einfache und kostengünstige Lösung zur Lagerung des Einsatzes geschaffen.

Außerdem wird eine Möglichkeit geschaffen, den Einsatz auf besonders einfache Weise zur Anpassung des Strömungswächters an unterschiedliche Gegebenheiten anzupassen. Dies ist gegeben, wenn der Einsatz zwei voneinander beabstandete Dichtungselemente, z.B. zwei O-Ringe aufweist, die beidseits der Engstelle angeordnet sind und zwischen denen eine ringförmige Kammer definiert ist, wenn der Einsatz in seinem Durchgang sitzt. Diese Kammer bildet dann einen Teil des Kanals (Saugkanals). Ausgehend von dieser Kammer führt ein weiterer Kanal zu der Erfassungseinrichtung. Dies hat den Vorteil, dass entsprechende kleine Durchgangsöffnungen, z.B. Saugöffnungen an der Engstelle, bei verschiedenen Einsätzen an axial unterschiedlichen Stellen angeordnet werden können. Außerdem können bedarfsweise unterschiedliche Saugöffnungsdurchmesser und Saugöffnungen in unterschiedlicher Anzahl verwendet werden, z.B. um das Ansprechverhalten oder die Ansprechgeschwindigkeit zu beeinflussen.

Eine Ausrichtung der Saugöffnungen auf weitere, durch das Gehäuse führende Kanäle ist nicht erforderlich. Damit gestattet die Ausbildung einer ringförmigen Kammer zwischen dem Einsatz und der Wandung des Durchgangs die Verwendung sehr weit voneinander abweichender und unterschiedlicher Einsätze und somit die Anpassung des Strömungswächters an sehr unterschiedliche Einsatzfälle.

Zusätzlich zu dem genannten Kanal (Saugkanal) kann ein Druckkanal vorgesehen sein, der ebenfalls zu der Erfassungseinrichtung führt. Diese ist dann vorzugsweise als eine Differenzdruck-Erfassungseinrichtung ausgebildet, die von dem Differenzdruck zwischen dem Druckkanal und dem Saugkanal gesteuert wird. Dies hat den Vorteil, dass schon bei sehr geringen Strömungsgeschwindigkeiten eine Druckdifferenz ableitbar ist, die ein Schaltsignal oder ein Messsignal erzeugen kann. Dies ermöglicht es in noch besserem Maße, mit geringen Querschnittsverengungen in dem auswechselbaren Einsatz auszukommen, wodurch dieser auch bei hohen Durchströmungen nur einen geringen Druckabfall erzeugt, wobei die Erfassungseinrichtung auch Durchströmungen nahe Null noch sicher erfassen kann.

Der Druckkanal kann mit einer Einrichtung zur Erzeugung eines Staudrucks verbunden sein. In einem einfachen Fall ist dies ein Ringspalt, der sich in einer Richtung entgegen dem ankommenden Fluid öffnet. Dieser Ringspalt kann bspw. konzentrisch zu dem auswechselbaren Einsatz angeordnet sein.

Die Erfassungseinrichtung kann eine Schalteinrichtung oder eine Sensoreinrichtung sein. Ist sie als Schalteinrichtung ausgebildet, gibt sie ein Schaltsignal ab, das seinen ersten Zustand einnimmt, wenn die Strömung Null ist oder einen Grenzwert unterschreitet und die ihren zweiten Zustand einnimmt, wenn die Strömung den Schaltwert (Grenzwert) überschreitet. Die Schalteinrichtung ist im einfachsten Fall durch einen Schaltkontakt, bspw. ein Reedrelais gebildet, das durch eine von der Druckdifferenz auslenkbare Membran betätigt wird, die einen Permanentmagneten trägt. Alternativ kann eine mehrstufige Schalteinrichtung vorgesehen sein, bei der nacheinander mehrere Kontakte mit zunehmender Auslenkung der Membran schließen (oder auch öffnen). Dies kann bspw. erreicht werden, indem in dem Magnetfeld des von der Membran getragenen Magneten mehrere Reedrelais an unterschiedlichen Stellen angeordnet werden.

Alternativ kann die Auslenkung der Membran diskret oder analog erfasst werden, um ein den Druckgefälle bzw. der Strömungsgeschwindigkeit entsprechendes Signal zu liefern.

Zwischen den beiden Kammern der Differenzdruck-Erfassungseinrichtung oder den beiden zu den Kammern führenden Kanälen (Saugkanal und Druckkanal) oder zwischen einem Kanal und der jeweils anderen Kammer kann ein Bypasskanal angeordnet sein, der mit einer Einstellvorrichtung versehen ist. Dies ermöglicht die Kalibrierung der Einrichtung nach der Fertigung. Außerdem kann dadurch die Anzahl der vorzuhaltenden Einsätze reduziert werden, indem bspw. die Empfindlichkeits-Abstufungen zwischen den Einsätzen größer gemacht und die Zwischenbereiche durch Justage mit der Einstellvorrichtung überbrückt werden.

Außerdem ist es zweckmäßig, wenn an dem Gehäuse Anschlussstücke angeordnet sind, die an dem Gehäuse beweglich gelagert sind. Insbesondere wird es als zweckmäßig angesehen, drehbar gelagerte Anschlussstücke vorzusehen. Diese können zur Verbindung mit zu- und abführenden Rohren ein Außengewinde tragen. Sind die Anschlussstücke drehbar gelagert, kann die Schraubverbindung zwischen dem zu- oder abführenden Rohr bzw. einer entsprechenden Muffe und der Einrichtung (dem Strömungswächter) hergestellt werden, indem die Anschlussstücke in die ruhend gehaltene Muffe oder das Rohrende eingeschraubt werden, wobei der Strömungswächter nicht mitgedreht werden muss. Damit kann der erfindungsgemäße Strömungswächter auch nachträglich in vorhandene Rohre eingesetzt werden, indem diese durchtrennt und mit Gewindemuffen versehen werden. Der zwischengesetzte Strömungswächter kann dann durch Drehung seiner Anschlussstücke in die Muffen eingeschraubt werden. Wesentlich dabei ist, dass wenigstens eines der Anschlussstücke drehbar gelagert ist, so dass diese gegeneinander verdrehbar sind.

Es wird als vorteilhaft angesehen, die Anschlussstücke mittels Klemmbügel an dem Gehäuse zu halten, wobei die Klemmbügel eine Drehung des Anschlussstücks zulassen. Der Vorzug dieser Lösung liegt in ihrer Demontierbarkeit. Werden die Klemmbügel abgenommen, können die Anschlussstücke ausgetauscht werden, um andere Rohrweiten oder andere Gewindegrößen oder andere Anschlusstypen verfügbar zu machen.

Vorteilhafte Einzelheiten von Ausführungsformen der Erfindung ergeben sich aus der Zeichnung, der Beschreibung oder Unteransprüchen.

In der Zeichnung ist ein Ausführungsbeispiel der Erfindung veranschaulicht. Es zeigen:
Fig. 1 den erfindungsgemäßen Strömungswächter in einer perspektivischen Darstellung,
Fig. 2 den Strömungswächter nach Figur 1, in einer Explosionsdarstellung,
Fig. 3 den Strömungswächter nach Figur 1, in einer längsgeschnittenen Darstellung und in einem anderen Maßstab,
Fig. 4 den Strömungswächter nach Figur 3, geschnitten entlang der Linie IV-IV,

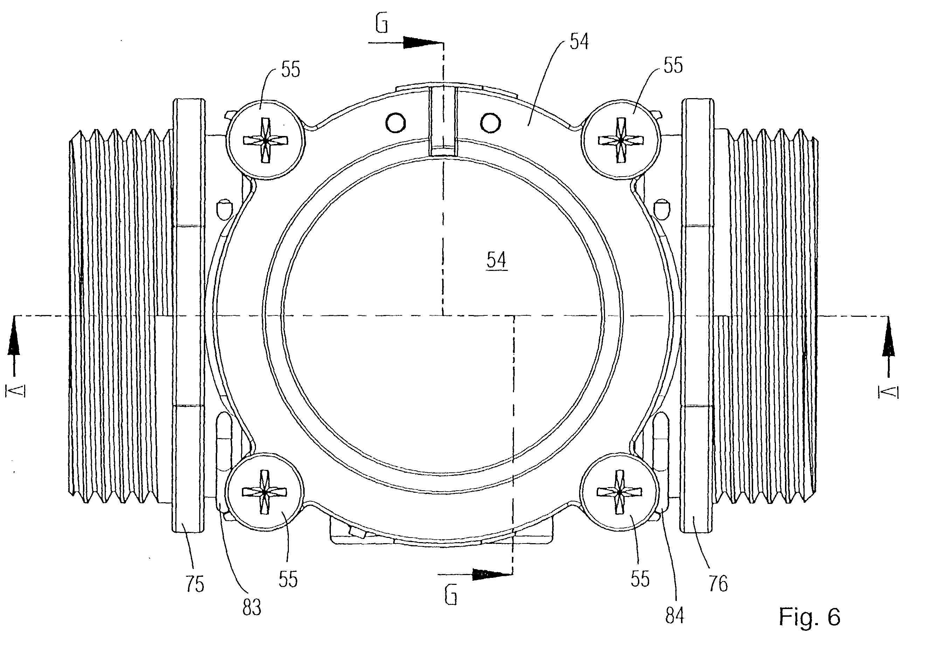

Fig. 5 den Strömungswächter nach Figur 3, geschnitten entlang der Linie V-V, dargestellt in Figur 6,
Fig. 6 den Strömungswächter nach Figur 1 und 3, in Draufsicht, und
Fig. 7 den Strömungswächter nach Figur 1, in einer Schnittdarstellung mit einem anderen Einsatz.

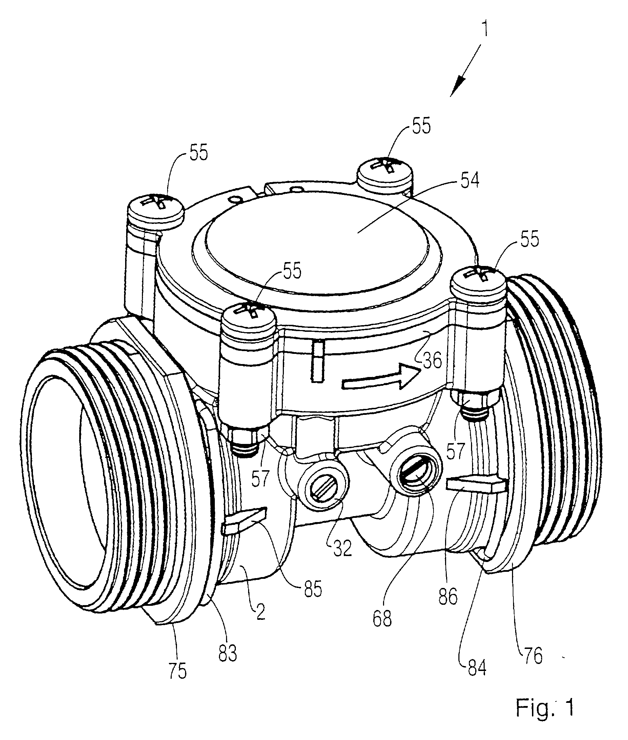

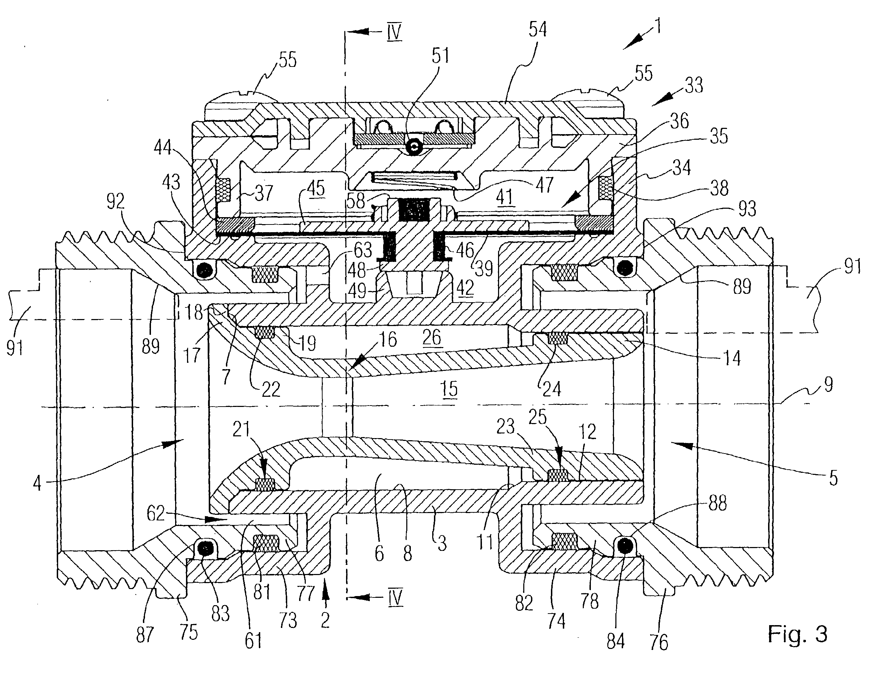

In Figur 1 ist ein Strömungswächter 1 veranschaulicht, der zur Erfassung von Fluidströmungen dient. Insbesondere ist er dazu vorgesehen, in ein wasserführendes Leitungssystem eingebaut zu werden, um zu erfassen, ob er von dem in dem System vorhandenen Wasser durchströmt wird oder nicht. Der Strömungswächter 1 weist ein Gehäuse 2 auf, das als einstückiger Körper ausgebildet ist und dessen Aufbau aus der Schnittdarstellung gemäß Figur 3 hervorgeht. Es weist einen zentralen rohrförmigen Abschnitt 3 auf, der sich von einer Zuströmöffnung 4 zu einer Abströmöffnung 5 erstreckt und einen Durchgang 6 festlegt.

Der rohrförmige Abschnitt 3 weist an seinen der Zuströmöffnung 4 zugewandten Ende ein ringförmige Stirnfläche 7 auf, die über eine Phase oder eine Rundung in einen zylindrischen Wandungsabschnitt 8 des Durchgangs 6 übergeht. Der Wandungsabschnitt 8 ist etwa zylindrisch ausgebildet und koaxial zu einer Längsmittelachse 9 des Durchgangs 6 angeordnet.

An einer axial von der Stirnfläche 7 beabstandeten Stelle geht der Wandungsabschnitt 8 über eine Schrägschulter 11 in einen weiteren Wandungsabschnitt 12 über, der ebenfalls zylindrisch ausgebildet ist. Er weist jedoch einen geringeren Durchmesser auf als der Wandungsabschnitt 8.

In den Durchgang 6 ist ein Einsatz 14 eingesetzt, der einen Durchgangskanal 15 umgrenzt. Der Durchgangskanal 5 ist nach Art eine Venturirohrs ausgebildet. Ausgehend von seiner zuströmseitigen Öffnung verengt er sich bis zu einer Engstelle 16, die den geringsten freien Strömungsquerschnitt des Einsatzes 14 aufweist. Ausgehend von der Engstelle 16 erweitert sich der Durchgangskanal 15 allmählich wieder, so dass zwischen der Engstelle 16 und dem abströmseitigen Ende des Einsatzes 14 ein Diffusor ausgebildet ist.

An seiner Außenseite weist der Einsatz 14 einen radial nach außen weisenden Ringflansch 17 auf, der mit einer Ringfläche 18 an der Stirnfläche 7 des rohrförmigen Abschnitts 3 anliegt, wenn der Einsatz 14 in das Gehäuse 2 eingesetzt ist. An die Ringfläche 18 schließt sich ein zylindrischer Abschnitt 19 an, dessen Außendurchmesser geringfügig kleiner ist als der Innendurchmesser der Wandung 8. In dem zylindrischen Abschnitt 19 ist eine Ringnut 21 untergebracht, in der zur Abdichtung ein O-Ring 22 oder ein anderweitiges entsprechendes Dichtungselement sitzt.

An dem abströmseitigen Ende weist der Einsatz 14 ebenfalls eine zylindrische Außenkontur auf, wobei der Durchmesser hier geringfügig geringer ist als der des Wandungsabschnitts 12. Dieser zylindrische Abschnitt des Einsatzes 14 ist ebenfalls mit einer Ringnut 24 versehen, die der Aufnahme eines O-Rings 25 zur Abdichtung des Einsatzes 14 und zur reibschlüssigen Lagerung desselben in dem Durchgang 6 dient.

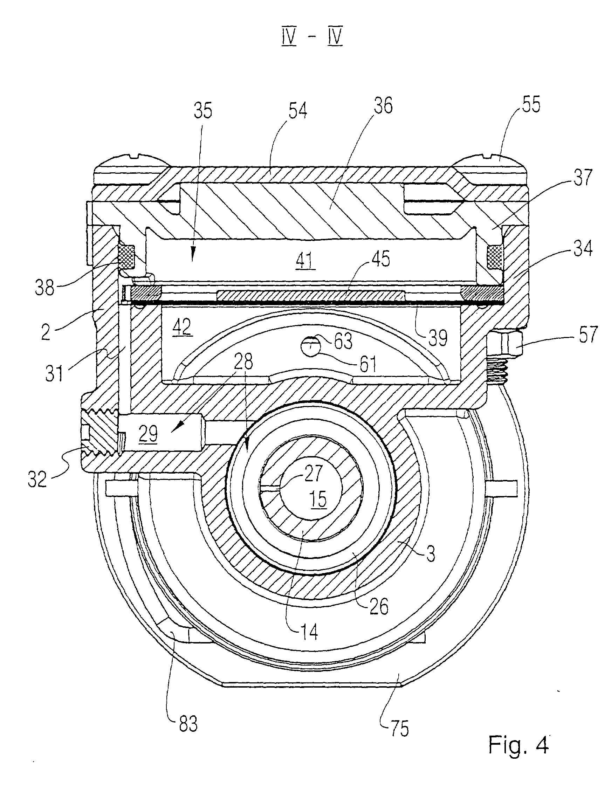

Zwischen den zylindrischen Abschnitten 19, 23 ist der Durchmesser des Einsatzes 14 geringer, so dass zwischen den zylindrischen Abschnitten 19, 23 einerseits und der Wandung 8 sowie dem Einsatz 14 andererseits eine Kammer 26. Diese steht mit dem Durchgangskanal 15 über eine aus Figur 4 ersichtliche Saugöffnung 27 in Verbindung, die an der Engstelle 16 angeordnet ist. Bedarfsweise können auch mehrere Saugöffnungen 27 entlang des Umfangs des Einsatzes 14 angeordnet sein. Im Einzelfall können die Saugöffnungen, bspw. zum Einstellen der Empfindlichkeit des Strömungswächters 1, auch in Axialrichtung (Mittelachse 9) vor oder hinter der Engstelle 16 angeordnet sein.

Die Saugöffnung 27 und die Kammer 26 gehören zu einem Saugkanal 28, der sich ausgehend von der Kammer 26 im weiteren in Form von Bohrungen 29, 31 oder entsprechenden Kanälen durch das Gehäuse 2 fortsetzt. Nach außen hin ist der Saugkanal 28 verschlossen. Herstellungsbedingt können Öffnungen erforderlich sein, die nach der Herstellung bspw. durch Schraubstopfen 32 verschlossen werden.

An dem Gehäuse 2 ist, wie aus Figur 3 und 4 hervorgeht, eine Erfassungseinrichtung 33 in Form einer Druckerfassungseinrichtung ausgebildet bzw. angeordnet. Zu der Erfassungseinrichtung 33 gehört ein sich radial von der Mittelachse 9 weg erstreckender dosenartiger Fortsatz 34, der einen flachen zylindrischen Innenraum 35 festlegt. Dieser ist nach außen hin durch einen Einsatz 36 verschlossen, der mit einem zylindrischen Rand 37 in den Innenraum 35 greift. Der Rand 37 ist mit einer Ringnut versehen, in der ein O-Ring 38 als Dichtungselement zur Abdichtung des Innenraums 35 sitzt.

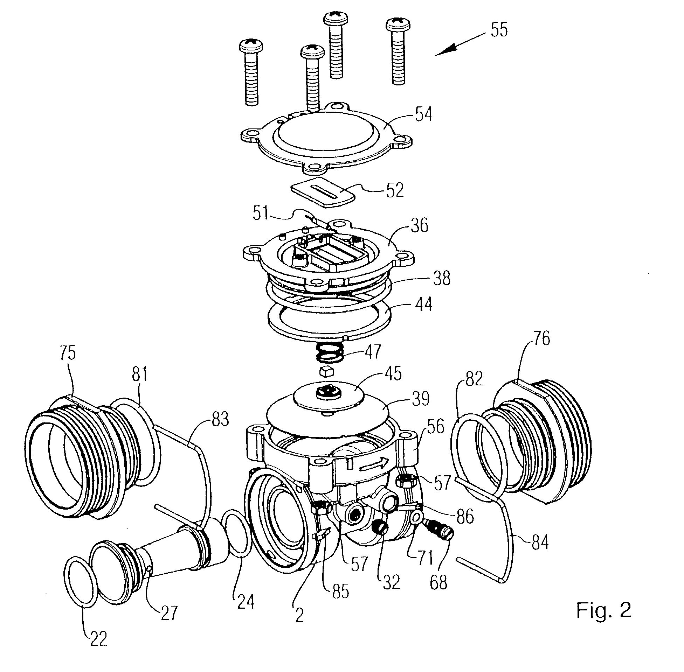

Der Innenraum 35 ist durch eine, insbesondere aus Figur 2 ersichtliche, Membran 39 in zwei Kammern 41, 42 unterteilt. Die obere Kammer 41 ist, wie insbesondere aus Figur 4 hervorgeht, mit dem Saugkanal 28 verbunden.

Die Membran 39 ist in dem Innenraum 35 randseitig eingespannt. Dazu dient eine ringförmige Anlagefläche 43, die am Boden des Innenraums 35 in unmittelbarer Nachbarschaft des Außenrands ausgebildet ist. Zum Festklemmen der Membran 39 dient ein entsprechender Zwischenring 44, über den der Rand 37, die Membran 39 an die Anlagefläche 43 drückt.

Die Membran 39 ist in ihrer Mitte durch ein Formstück 45 ausgesteift, das als Membranteller wirkt. Es weist einen flachen scheibenförmigen Mittelteil auf, von dem ausgehend sich ein zapfenartiger Fortsatz durch eine Zentralöffnung 46 der Membran erstreckt. An diesem Fortsatz sitzt die Membran 39 abgedichtet.

Das Formstück 45 ist über eine Schraubenfeder 47 in einer Richtung von dem Deckel 36 weg nach innen vorgespannt. Die Vorspannung hat eine solche Richtung, dass sie dazu tendiert, die Kammer 41 möglichst zu vergrößern und das Volumen der Kammer 42 möglichst zu verringern. Entsprechend liegt der Fortsatz des Formstücks 45 mit einem fußartigen Teil 48 an einer entsprechenden ringförmigen Anlage 49 an, die an dem Boden der Kammer 42 ausgebildet ist.

Zu der Schalteinrichtung 33 gehört ein außerhalb der Kammer 41 oder 42 angeordnetes Schaltelement, z.B. ein Reedrelais 51, das mittels eines aus Figur 2 ersichtlichen Klemmstücks 52 in einer an dem Deckel 36 ausgebildeten Kammer gehalten ist. Nach außen hin ist diese Kammer durch einen weiteren Deckel 54 verschlossen, der durch Schrauben 55 gehalten ist. Diese durchgreifen auch den Deckel 36 und sind in entsprechenden, aus Figur 2 ersichtlichen Taschen 56 gehalten, die an dem Gehäuse 2 ausgebildet sind. Die Schrauben können dabei unmittelbar in die Taschen 56 eingeschraubt sein oder diese durchgreifen und durch Muttern 57 gehalten sein.

Zur Betätigung des Reedkontakts 51 dient ein Permanentmagnet 58, der in dem Formstück 45 angeordnet ist. Sein Feld erreicht den Reedkontakt 51, wobei die Stärke des Magnetfelds und die Position des Permanentmagneten 58 so gewählt ist, dass der Reedkontakt 51 keinen Stromfluss zulässt, wenn der fußartige Abschnitt 48 des Formstücks 45 auf dem Anschlagteil 49 aufliegt. Wird die Membran 39 jedoch merklich ausgelenkt, so dass der Fuß 48 von der Anlage 49 abhebt, schließt der Reedkontakt 51.

Die Erfassungseinrichtung 33 des Strömungswächters 1 ist als Differenzdruckerfassungseinrichtung ausgebildet, wobei die Druckdifferenz zwischen den Kammern 41, 42 die Auslenkung der Membran 39 bewirkt. Während die Kammer 41 über den Saugkanal 28 mit dem an der Engstelle 16 des Einsatzes 14 herrschenden Druck beaufschlagt ist, ist zur Druckbeaufschlagung der Kammer 42 ein Druckkanal 61 vorgesehen. Dieser ist aus den Figuren 3 und 4 ersichtlich. Der Druckkanal 61 beginnt eingangsseitig bei einem Ringschlitz 62, der zwischen einem rohrförmigen Ende des rohrförmigen Abschnitts 3 und einem diesen übergreifenden Teil des Gehäuses 2 ausgebildet ist. Der ringförmige Schlitz 62 weist einen Durchmesser auf der größer ist als der Außendurchmesser des Einsatzes 14 und ist entgegen der Strömungsrichtung geöffnet. Von dem Schlitz 62 ausgehend führt eine Durchgangsbohrung 63 in die Kammer 42.

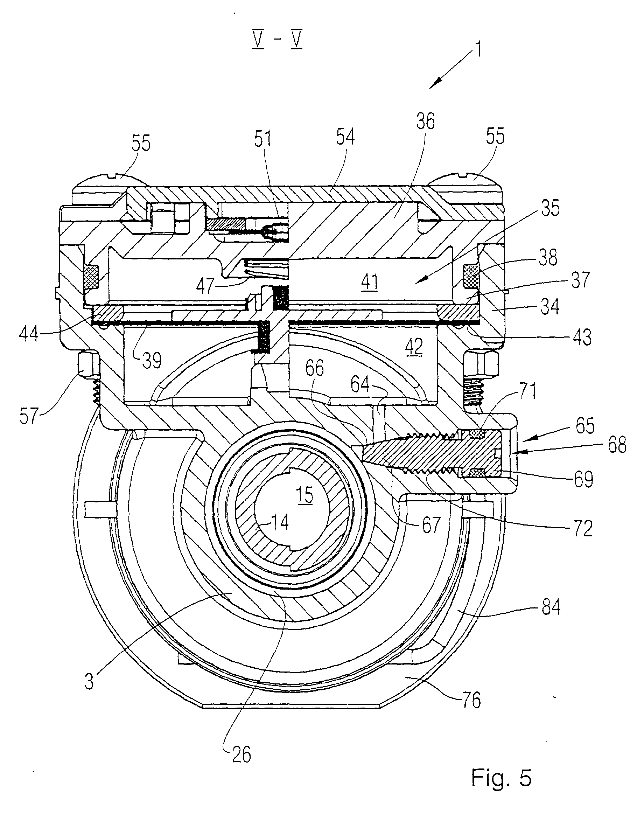

Um eine gewisse Justage der Empfindlichkeit oder der Ansprechschwelle des Strömungswächters 1 zu gestatten, ist bei einer bevorzugten Ausführungsform, wie sie aus Figur 5 ersichtlich ist, ein Bypasskanal 64 vorgesehen, der aus der Kammer 42 in die Kammer 26 führt. Der Bypasskanal 64 verbindet somit sowohl die Kammern 41, 42 miteinander als auch den Saugkanal 28 mit dem Druckkanal 61.

In dem Bypasskanal 64 ist eine Stelleinrichtung 65 angeordnet, mit der die Wirksamkeit des Bypasskanals 64 einstellbar ist und mittels derer der Bypasskanal 64 bedarfsweise auch ganz verschließbar ist. Die Stelleinrichtung 65 wird durch einen in dem Bypasskanal 64 ausgebildeten Ventilsitz, bspw. eine konische Sitzfläche 66 gebildet, der ein Ventilverschlussglied, bspw. ein Ventilkegel 67 zugeordnet ist. Dieser kann an dem freien Ende einer Einstellschraube 68 ausgebildet sein, deren Kopf 69 zur Abdichtung einen O-Ring 71 trägt, der mit der zylindrischen Innenwandung einer Aufnahmekammer für den Kopf 69 abdichtet. Die Einstellschraube 68 weist vorzugsweise ein selbstschneidendes Gewinde 72 auf, um eine besonders rationelle Fertigung zu ermöglichen.

Zum Anschluss von Rohrleitungen weist das Gehäuse 2 sowohl an seiner Einströmöffnung 4 als auch an seiner Ausströmöffnung 5 rohrförmige Ansatzbereiche 73, 74 auf, die ihnen eine zylindrische Wandungsfläche aufweisen. In diese Ansatzbereiche 73, 74 sind Anschlussstücke 75, 76 eingesetzt, die mit einem rohrförmigen Fortsatz 77, 78 in die Anschlussbereiche 73, 74 greifen. Jeder rohrförmige Fortsatz 77, 78 trägt in einer entsprechenden Ringnut jeweils einen O-Ring 81, 82, der eine Abdichtung zwischen dem jeweiligen Anschlussstück 75, 76 und dem Gehäuse 2 bewirkt. Zur drehbaren Lagerung der Anschlussstücke 75, 76 an dem Gehäuse 2 dienen Federbügel 83, 84 (siehe auch Figur 2 und 4), die mit dem Gehäuse 2 lösbar verrastet sind. Dazu dienen entsprechende an dem Gehäuse 2 angeformte Rastvorsprünge 85, 86. Die Federbügel 83, 84 durchgreifen die rohrflanschartigen Abschnitte 73, 74 bei entsprechenden aus Figur 2 ersichtlichen Bohrungen und greifen damit in Ringnuten 87, 88 der Anschlussstücke 75, 76, um diese axial an dem Gehäuse 2 zu sichern.

Die Anschlussstücke 75, 76 sind untereinander gleich ausgebildet und gegeneinander austauschbar. Sie weisen eingangsseitig zunächst eine Kegelsitzfläche 89 auf, die als Anlage für ein in das jeweilige Anschlussstück 75, 76 einzuschiebendes und in Figur 3 gestrichelt angedeutetes Rohrende 91 dient. Die durch die Ausbildung des Gehäuses 2 und insbesondere die Position der Federbügel 83, 84 sowie von Anlageflächen 92, 93 bestimmte Axialposition der Anschlussstücke 75, 76 ist jedoch grundsätzlich unterschiedlich. Während die Kegelfläche 89 in einigem Axialabstand zum Eintritt des Einsatzes 14 steht, schließt der Einsatz 14 an seinem ausströmseitigen Ende relativ nahe an die Kegelfläche 89 an. Ein eingeschobenes Rohrende 91 steht dabei nahe an dem Ende des Einsatzes 14, wodurch ein aus diesem herauskommender Fluidstrahl, insbesondere mit geringen Druckverlusten in das wegführende Rohr 91 eintritt.

Im Gegensatz dazu hält ein in das Anschlussstück 75 eingeschobenes Rohrende 91 einen erheblichen Abstand zu dem Eingang des Einsatzes 14 ein, so dass hier unter statischem Druck stehendes Fluid in den Ringspalt 62 und somit in die Kammer 42 eintreten kann. Werden zuführende Rohre mit großem Innendurchmesser eingesetzt, kann sogar der Staudruck des ankommenden Fluids über den Druckkanal 61 in die Kammer 42 gelangen und dort wirksam werden.

Der insoweit beschriebene Strömungswächter 1 arbeitet wie folgt:

In Betrieb ist an beide Anschlussstücke 75, 76 jeweils ein Rohr 91 angeschlossen. Der Durchgangskanal 15 und die mit diesem kommunizierenden Räume sind mit dem durchströmenden Fluid geflutet. Die Kammern 41, 42 können ebenfalls geflutet sein. Je nach Einbaulage kann hier jedoch auch eine Luftblase verbleiben.

Ruht die Strömung, d.h. ist der Durchgangskanal 15 nicht durchströmt, ist an dem Druckkanal 61 und dem Saugkanal 28 jeweils der gleiche Druck vorhanden. Beide Kammern 41, 42 stehen somit unter gleichem Druck. Die Druckfeder 47 kann somit die Membran 39 ungehindert gegen den Anschlag 49 vorspannen. Der Permanentmagnet 58 hat den größtmöglichen Abstand zu dem Reedkontakt 51. Damit unterbricht dieser jeden über ihn führenden Stromkreis. Ist ein Reedkontakt mit Wechsler vorgesehen, ist ein Stromkreis unterbrochen und ein anderer geschlossen.

Beginnt eine Strömung durch den Durchgangskanal 15 zu fließen, verursacht dies, zumindest wenn die Strömung ein gewisses Mindestmaß überschreitet, eine Druckdifferenz zwischen dem Druckkanal 61 und dem Saugkanal 28. Diese Druckdifferenz stellt sich auch zwischen den Kammern 41, 42 ein, d.h. mit zunehmender Strömungsgeschwindigkeit wird der Druck in der Kammer immer kleiner, während der Druck in der Kammer 42 gleich bleibt oder infolge des Staudrucks gegen den Ringschlitz 62 sogar etwas ansteigt. Dadurch wird schließlich die Membran 39 ausgelenkt, so dass sich der Permanentmagnet 58 dem Reedrelais 51 annähert. Damit schließen dessen Kontakte oder bei einem Umschaltrelais schalten die Kontakte um. Dieser Vorgang kann sich schon bei sehr geringen Strömungsgeschwindigkeiten abspielen, insbesondere wenn zusätzlich zu der Saugwirkung in der Engstelle 16 des Einsatzes 14 der Staudruck an dem Ringspalt 62 zur Erhöhung der Druckdifferenz genutzt wird.

Die Membran 39 ist ohne Vorspannung eingebaut - sie widersetzt sich der Auslenkung nicht. Es genügt eine relativ schwache Druckfeder 47, um die Membran 39 in eine Vorzugslage zu bringen, in der der Fuß 48 auf der Anlage 49 aufsitzt. Dies ist außerdem zweckmäßig, um den Strömungswächter 1 unabhängig von seiner Einbaulage funktionsfähig zu halten.

Soll der Schaltpunkt des Reedrelais justiert werden, kann dies mit der Einstellschraube 68 geschehen. Je mehr diese den Bypasskanal verschließt, desto empfindlicher spricht der Strömungswächter 1 an, d.h. bei desto geringeren Durchströmungen wird das Reedrelais 51 umgeschaltet (eingeschaltet).

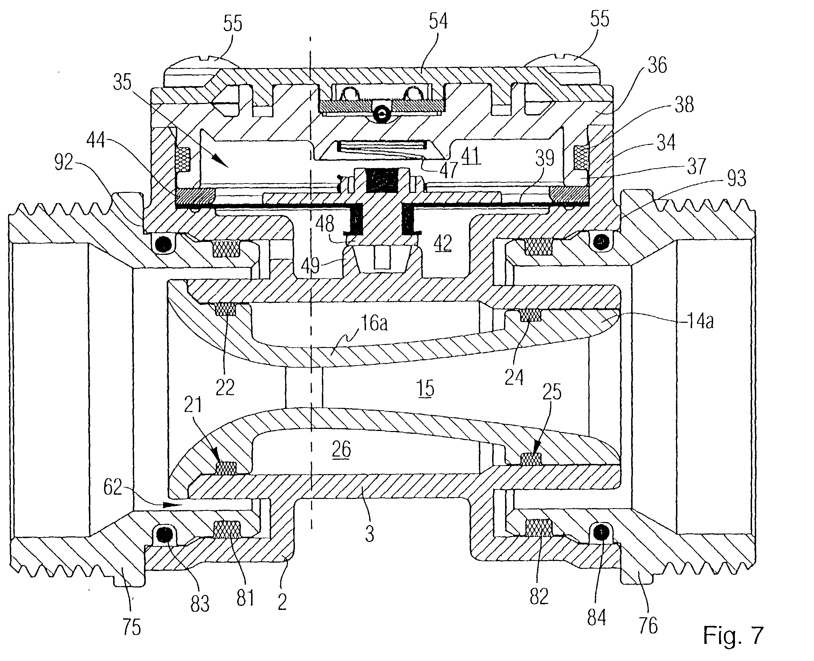

Außer der prinzipiellen Einstellbarkeit mittels der Einstellschraube 68 (einmalige Einstellung zum Abgleich in der Fertigung oder auch Justage vor Ort, um verschiedenen Systembedingungen oder Einbaulagen Rechnung zu tragen) ist eine grundsätzliche Anpassung des Strömungswächters 1 an unterschiedliche Anwendungsfälle durch Auswechseln der Einsätze 14 gegeben. Es wird dazu auf Figur 7 verwiesen, in der der Strömungswächter 1 mit einem anderen Einsatz 14a veranschaulicht ist. Dieser Einsatz 14a weist eine Engstelle 16a auf, deren Durchmesser wesentlich geringer ist als der Durchmesser der Engstelle 16 gemäß Figur 3. Damit spricht der Strömungswächter 1 nach Figur 7 bereits bei viel niedrigeren Durchströmungswerten an als der Strömungswächter nach Figur 3. Außerdem begrenzt er die Strömung auf geringere Durchflusswerte. Er kann somit in einem System niedrigerer Leistung eingesetzt werden.

Der Einsatz 14a kann außerdem hinsichtlich der Anzahl des Durchmessers und der Lage seiner Saugbohrung 27 abweichen. Durch den Durchmesser der Saugbohrung lässt sich das Zeitverhaltend, d.h. die Ansprechgeschwindigkeit des Strömungswächters 1 einstellen. Soll der Strömungswächter 1 zusätzlich eine Drosselfunktion erfüllen, jedoch relativ spät ansprechen, ist bspw. eine Engstelle 16a mit kleinem Durchmesser vorzusehen, wobei die Saugbohrung dann nicht exakt an der Engstelle 16a, sondern davor oder dahinter anzuordnen ist.

Außerdem können zur Anpassung des Strömungswächters 1 an unterschiedliche Rohrquerschnitte, bspw. in einem leistungsschwächeren System, die Anschlussstücke 75, 76 gegen Anschlussstücke mit anderen Anschlussmaßen gewechselt werden. Darüber hinaus können Anschlussstücke 75, 76 auf Vorrat gehalten werden, die im Bereich des Ringspalts 62 andere Innendurchmesser aufweisen, um den Ringspalt 62 zu vergrößern oder zu verkleinern. Auch damit lässt sich das Ansprechverhalten des Strömungswächters 1 beeinflussen.

Die Anschlussstücke 75, 76 lassen sich leicht auswechseln. Ebenso leicht lassen sich die Einsätze 14, 14a auswechseln. Diese sind in dem Durchgang 6 lediglich reibschlüssig gehalten. Dies bewirken die O-Ringe 21, 25.

Durch die Auswechselbarkeit der Anschlussstücke 75, 76 und insbesondere durch die Auswechselbarkeit der Einsätze 14, 14a ist ein besonders leicht handhabbares und sehr variables Baukastensystem geschaffen, mit dem aus einer geringen Anzahl von Grundteilen Strömungswächter für die verschiedensten Anwendungsfälle bereitgestellt werden können. Insbesondere die Variabilität durch Auswechselbarkeit der Einsätze 14, 14a gestattet es dem Hersteller auch auf Sonderanwendungen oder Kleinstserien zu reagieren, indem bspw. lediglich der Einsatz 14 speziell gefertigt wird. Dieser kann als Drehteil sonderangefertigt werden, während die restlichen Teile des Strömungswächters 1 Spritzgussteile (Kunststoff) sind und aus der Massenfertigung stammen. Die O-Ringe 21, 25 bewirken einen Dehnungs- und Toleranzausgleich auch dann, wenn das Gehäuse 2 aus Kunststoff und der Einsatz 14, 14a aus einem anderen Werkstoff, bspw. einem Metall gefertigt ist.

Ein vielseitig einsetzbarer und leicht an unterschiedliche Anwendungsfälle anpassbarer Strömungswächter 1 weist einen Durchgang 6 auf, in dem verschiedene, für den jeweiligen Einsatzfall vorgesehene oder individualisierte Einsätze 14 einsteckbar sind. Die Einsätze sind vorzugsweise lediglich reibschlüssig gehalten, um eine leichte Auswechselbarkeit zu ermöglichen. Außerdem ermöglicht der Sitz und die Lagerung durch Reibschluss, bspw. in Form von O-Ringen einen sehr guten Toleranzausgleich, so dass Fertigungstoleranzen durch Spritzgusstechnik, Materialschrumpfungen oder Verwendung unterschiedlicher Materialien ausgeglichen werden. Damit ergibt sich ein besonders fertigungssicherer Strömungswächter 1.

## Patentansprüche

1. Einrichtung (1) zur Erfassung einer Fluidströmung, insbesondere für Schaltzwecke,
mit einem Gehäuse (2), das eine Zuströmöffnung (4) und eine Abströmöffnung(5) und einen Durchgang (6) aufweist, der von der Zuströmöffnung (4) zu der Abströmöffnung (5) führt,
mit einem Einsatz (14), der in den Durchgang (6) eingesetzt ist und einen Durchgangskanal (15) festlegt, dessen Querschnitt sich entlang seiner Längrichtung (9) ändert und eine Engstelle (16) festlegt,
mit einer Druck empfindlichen Erfassungseinrichtung (33),
mit wenigstens einem Kanal (28), der von dem Einsatz (14) abzweigt und zu der Erfassungseinrichtung (33) führt.

2. Einrichtung nach Anspruch 1, **dadurch gekennzeichnet, dass** der Einsatz (14) in dem Durchgang reibschlüssig gehalten ist.

3. Einrichtung nach Anspruch 1 oder 2, **dadurch gekennzeichnet, dass** der Einsatz (14) durch Anlage an einer Anlagefläche (7) axial positioniert ist.

4. Einrichtung nach Anspruch 1, **dadurch gekennzeichnet, dass** der Einsatz (14) mit einem Befestigungsmittel zusammenwirkt, das zur Lagesicherung des Einsatzes (14) in dem Durchgang (6) vorgesehen ist.

5. Einrichtung nach Anspruch 1, **dadurch gekennzeichnet, dass** der Einsatz (14) in dem Durchgang (6) lösbar gehalten ist.

6. Einrichtung nach Anspruch 1, **dadurch gekennzeichnet, dass** der Einsatz (14) einen Durchmesser ausweist, der kleiner ist als der Durchmesser Durchmesser der Zuströmöffnung (4), so dass der Einsatz durch die Zuströmöffnung (4) hindurch in den Durchgang (6) einführbar und durch die Zuströmöffnung (4) hindurch aus dem Gehäuse (2) herausnehmbar ist.

7. Einrichtung nach Anspruch 1, **dadurch gekennzeichnet, dass** der Durchgang (6) wenigstens einen zylindrischen Innenwandungsabschnitt (8) aufweist, der als Dichtfläche für wenigstens ein an dem Einsatz vorgesehenes Dichtungselement (22) dient.

8. Einrichtung nach Anspruch 1, **dadurch gekennzeichnet, dass** der Durchgang (6) zwei voneinander beabstandete zylindrische Innenwandungsabschnitte (6, 12) aufweist, die als Dichtflächen für an dem Einsatz vorgesehene Dichtungselemente (22, 24) dienen, wobei zwischen den Dichtungselementen eine Kammer (26) ausgebildet ist, die über eine Öffnung (27) mit dem Durchgangskanal (15) verbunden ist und einen Abschnitt des Kanals (28) bildet.

9. Einrichtung nach Anspruch 1, **dadurch gekennzeichnet, dass** die in dem Durchgangskanal (15) des Einsatzes (14) vorgesehene Engstelle (16) von dem abströmseitigen Ende weiter entfernt ist als von dem zuströmseitigen Ende.

10. Einrichtung nach Anspruch 1, **dadurch gekennzeichnet, dass** der Durchgangskanal (15) nach Art einer Venturi-Düse ausgebildet ist.

11. Einrichtung nach Anspruch 1, **dadurch gekennzeichnet, dass** der Kanal (28) an der Engstelle (16) mit wenigstens einer Öffnung (27) in der Wandung des Durchgangskanals (15) mündet.

12. Einrichtung nach Anspruch 1, **dadurch gekennzeichnet, dass** dem Gehäuse (2) mehrere Einsätze (14, 14a) zugeordnet sind, die gegeneinander austauschbar sind und die sich hinsichtlich der Ausbildung des Durchgangskanals (15) unterscheiden.

13. Einrichtung nach Anspruch 1, **dadurch gekennzeichnet, dass** dem Gehäuse (2) mehrere Einsätze (14, 14a) zugeordnet sind, die gegeneinander austauschbar sind und die unterschiedliche Saugkanäle (28) oder Mündungsöffnungen (27) festlegen.

14. Einrichtung nach Anspruch 13, **dadurch gekennzeichnet, dass** sich die Einsätze hinsichtlich der Zahl der Mündungsöffnungen (27) des Kanals (28), der Größe und/oder der Position derselben unterscheiden.

15. Einrichtung nach Anspruch 1, **dadurch gekennzeichnet, dass** in dem Gehäuse (2) ein Druckkanal (61) ausgebildet ist, der zwischen der Zuströmöffnung (4) und der Abströmöffnung (5) abzweigt und zu der Erfassungseinrichtung (33) führt.

16. Einrichtung nach Anspruch 1, **dadurch gekennzeichnet, dass** der Druckkanal (61) an der Einströmöffnung (4) vor dem Einsatz(14) abzweigt.

17. Einrichtung nach Anspruch 1, **dadurch gekennzeichnet, dass** in dem Gehäuse (2) ein den Einsatz (14) konzentrisch umgebender Ringspalt (62) ausgebildet ist, der den Eingang des Druckkanals (61) bildet.

18. Einrichtung nach Anspruch 1, **dadurch gekennzeichnet, dass** die Erfassungseinrichtung (33) eine Differenzdruck-Erfassungseinrichtung ist.

19. Einrichtung nach Anspruch 18, **dadurch gekennzeichnet, dass** die Differenzdruck-Erfassungseinrichtung eine erste und eine zweite Druckkammer (41, 42) aufweist, die voneinander durch eine Membrane (39) getrennt sind, wobei die erste Druckkammer (41) mit dem Kanal (28) und die zweite Druckkammer (42) mit dem Druckkanal (61) verbunden ist.

20. Einrichtung nach Anspruch 19, **dadurch gekennzeichnet, dass** die Membrane (39) wirkungsmäßig mit einer Schalteinrichtung (51, 58) verbunden ist.

21. Einrichtung nach Anspruch 1, **dadurch gekennzeichnet, dass** zwischen dem Kanal (28) und dem Druckkanal (61) ein Bypasskanal (64) ausgebildet ist.

22. Einrichtung nach Anspruch 22, **dadurch gekennzeichnet, dass** der Bypasskanal (64) mit einer Stelleinrichtung (65) versehen ist.

23. Einrichtung nach Anspruch 1, **dadurch gekennzeichnet, dass** an der Einströmöffnung (4) ein Anschlussstück (75) angeordnet ist, dass mittels eines Dichtungselements (81) gegen das Gehäuse (2) abgedichtet ist und das an dem Gehäuse (2) beweglich gelagert ist.

24. Einrichtung nach Anspruch 1, **dadurch gekennzeichnet, dass** an der Abströmöffnung (5) ein Anschlussstück (76) angeordnet ist, dass mittels eines Dichtungselements (82) gegen das Gehäuse (2) abgedichtet ist und das an dem Gehäuse (2) beweglich gelagert ist.

25. Einrichtung nach Anspruch 23 und 24, **dadurch gekennzeichnet, dass** die Anschlussstücke (75, 76) koaxial zu einer gemeinsamen Längsachse (9) angeordnet und jeweils um die Längsachse (9) drehbar gelagert sind.

26. Einrichtung nach Anspruch 23 oder 24, **dadurch gekennzeichnet, dass** das Anschlussstück (75, 76) an dem Gehäuse (2) auswechselbar gelagert ist.

27. Einrichtung nach Anspruch 26, **dadurch gekennzeichnet, dass** das Anschlussstück (75, 76) an dem Gehäuse (2) mittels eines Klemmbügels (83, 84) gehalten ist.
